# EUROPEAN PATENT APPLICATION

(11) **EP 2 725 786 A1**
(43) Date of publication of application: **30.04.2014**
(21) Application number: 13190269.4
(22) Date of filing: 25.10.2013
(51) Int. Cl.: H04N 5/76, H04N 5/781, H04N 5/782

(54) **Apparatus for receiving broadcast and method of managing file used for time shift**

(30) Priority: 25.10.2012 KR 20120119124
(71) Applicant: Samsung Electronics Co., Ltd, Gyeonggi-do 443-742 (KR)
(72) Inventor: Lee, Hee-jung, Gyeonggi-do (KR)
(74) Representative: Walaski, Jan Filip

(57) **Abstract**

An apparatus for receiving a broadcast and a method of managing a file used for a time shift are provided. The apparatus includes a receiver which receives a broadcast signal, a signal processor which processes the broadcast signal to output broadcast data, a storage which stores the broadcast data, and a controller which, if a time shift function is executed, controls the signal processor to divide the broadcast data into a plurality of files and store the plurality of files, and, if a size of a storage area reaches a threshold value allocated to the time shift function, sequentially deletes the plurality of files to secure an additional storage area.

## Description

The present invention relates to receiving a broadcast and managing a file used for a time shift, and more particularly, to a broadcast receiving apparatus for managing a file used for time shift to divide real-time broadcasting data for performing a time shift function into a plurality of files and to manage the plurality of files, and a method of managing the file used for the time shift.

A recently supplied broadcast receiving apparatus provides a time shift function of storing and playing real-time broadcast data (e.g., data storing an image, a voice, and content information).

If the time shift function is used, a user may return to a past arbitrary time according to a request of the user during viewing of a real-time broadcast to view the broadcast. Also, the user may pause the real-time broadcast, and replay and view the real-time broadcast after an arbitrary time lapses.

For example, if the user misses a scoring goal scene during viewing of a football game, the user may rewind the football game to a different position in the game e.g., 5 minutes before a current time to watch the scoring goal. If the user temporarily steps away from watching a TV, which happens during an important scene, the user may pause a broadcast that the user is currently viewing and re-input a play command to view the broadcast when he or she returned to watching the TV.

Differently from general recording of a particular TV program or general recording performed only for a predetermined time, in a time shift mode, broadcast data is continuously recorded in a storage device until an operation is explicitly stopped. However, since broadcast data is to be recorded in a storage device having a finite capacity, a part of a content recorded previously is erased or overwritten to secure capacity.

A related art method of recording broadcast data transmitted in real time to provide a time shift function to a user in a storage includes a circular buffer method and a linear buffer method.

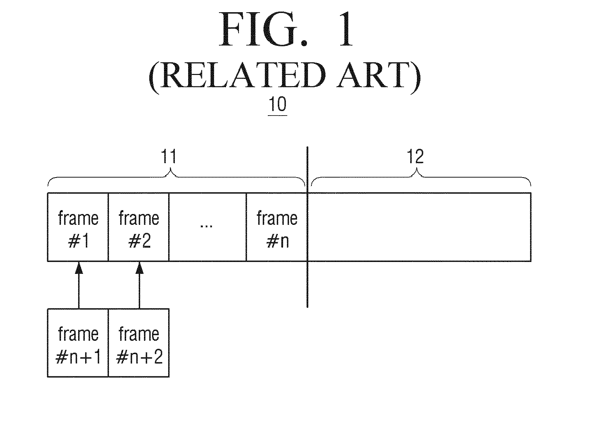

FIG. 1 is a view illustrating a method of recording data according to a circular buffer method.

In the circular buffer method, broadcast data is recorded in a space allocated as a storage area used for a time shift. If the broadcast data reaches an end of an available space, and thus there is no more free storage space to continue recording, the broadcast data is recorded to a front part of a buffer.

In other words, new content overwrites content previously recorded in the front part of the buffer, and thus the content written in the front part of the buffer automatically disappears.

In order to record broadcast data according to the circular buffer method, a storage space 10 is divided into a time shift storage area 11 and a recording area 12.

Real-time broadcast data is recorded in the time shift storage area 11, and a general content or recording is stored in the recording area 12.

If a time shift function is enabled, the broadcast data is stored in the time shift area 11 in the frame unit. If the time shift area 11 is filled, frames #1 and #2 stored in the beginning of the buffer 10 are sequentially deleted, and new broadcast data frame #n+1 and frame #n+2 are recorded in the part of the time shift area 11 instead of the frames #1 and #2. Accordingly, frames #1 and # 2 are deleted.

If broadcast data is recorded according to the circular buffer, the broadcast data is repeatedly recorded only in the time shift area 11. Therefore, there is a high probability that a bad sector will occur and thus a problem will occur in durability of a storage device. Also, chronological order of contents written in a file may be reversed.

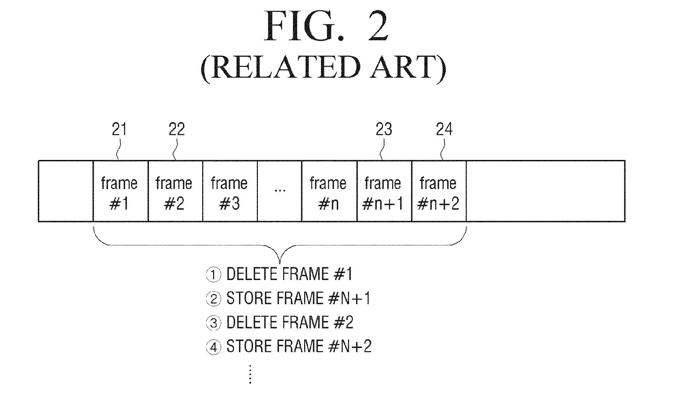

FIG. 2 is a view illustrating a method of recording data according to a linear buffer method.

If broadcast data is recorded in excess of an available capacity in the linear buffer method, data stored in a front part of a file is deleted according to chronological order, and data is sequentially recorded in a back part of the file.

A portion of a storage storing frames #1 through #n is referred to as an area in which broadcast data used for a time shift is stored.

Here, if frame #n+1 23 is received in excess of available space of a time shift storage area, frame #1 21 stored in the beginning of the storage area is deleted to secure storage space for the subsequent frames, and the frame #n+1 23 is stored in the end part of the storage area.

If frame #n+2 24 is received, frame #2 22 is deleted, and the frame #n+2 24 is stored.

If data is recorded according to the linear buffer method as described above, the data is recorded in a whole area of a storage space, and thus a problem occurring in the circular buffer method is solved. However, if a part of a file is repeatedly cut, and a new space is allocated to an end part to record data in the new space, an internal structure is complicated.

An operation of cutting the part of the file is not supported in a generally used file system.

As described above, if data is recorded according to a circular buffer method or a linear buffer method to provide a time shift function to a user, there is a high probability that a bad sector will occur and thus a problem will occur in durability of a storage device. Also, if a part of a file is repeatedly cut, and a new space is allocated to an end part to record data in the new space, an internal structure is complicated. Therefore, a new method of recording real-time broadcast data is required.

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide a broadcast receiving apparatus for dividing a storage file used for time shift into a plurality of files and storing the plurality of files, and a method of managing the file used for the time shift.

According to an aspect of the exemplary embodiments, there is provided an apparatus for receiving a broadcast. The apparatus may include a receiver which receives a broadcast signal, a signal processor which processes the broadcast signal to output broadcast data, and a controller which, in response to an execution of a time shift function, controls the signal processor to divide the broadcast data into a plurality of files and store the plurality of files in a storage area allocated to the time shift function, and which sequentially deletes the plurality of files to secure an additional storage area if a size of the storage area reaches a threshold value.

The apparatus may further include a storage which may store the broadcast data, the plurality of files, and a file index table for the plurality of files. The controller may update the file index table based on time offset information of a deleted file to secure the storage area, and, in response to receiving a play command with respect to the stored broadcast data in the plurality of files, controls the signal processor to detect and play a file stored in the storage selected from the plurality of files based on the updated file index table.

The controller may generate files and store subsequent data of the broadcast data in the generated files and store the generated files in the additional storage area. Sizes of the files may vary according to a bit rate of the broadcast signal.

According to another aspect of the exemplary embodiments, there is provided a method of managing a file used for a time shift. The method may include receiving a broadcast signal, processing the broadcast signal to output broadcast data, and in response to executing a time shift function, dividing the broadcast data into a plurality of files and storing the plurality of files in a storage area allocated to the time shift function, and sequentially deleting the plurality of files to secure an additional storage area if a size of the storage area reaches a threshold value.

The method may further include storing the broadcast data, storing a file index table for the plurality of files, updating the file index table based on time offset information of a deleted file to secure the additional storage area, and in response to receiving a play command with respect to broadcast data stored in the plurality of files, controlling the signal processor to detect and play a file used for the time shift selected from the plurality of files based on the updated file index table.

The method may further include generating files and storing subsequent data of the stored broadcast data in the generated files and storing the generated files in the additional storage area. Sizes of the files may vary according to a bit rate of the broadcast signal.

The above and/or other aspects will be more apparent by describing in detail exemplary embodiments with reference to the accompanying drawings, in which:
FIG. 1 is a view illustrating a method of recording data according to a circular buffer method;
FIG. 2 is a view illustrating a method of recording data according to a linear buffer method;
FIG. 3 is a block diagram illustrating a broadcast receiving apparatus according to an exemplary embodiment;
FIG. 4 is a view illustrating a method of dividing real-time broadcast data into a plurality of files and storing the plurality of files according to an exemplary embodiment;
FIG. 5 is a view illustrating a method of deleting a time shift file to secure a storage space if there is no available capacity in a storage space, according to an exemplary embodiment;
FIG. 6 is a view illustrating an index table of a plurality of files according to an exemplary embodiment;
FIG. 7 is a view illustrating a user interface (UI) for setting a time shift function according to an exemplary embodiment;
FIGS. 8A and 8B are views illustrating processes of storing broadcast data according to a size of a unit file according to exemplary embodiments;
FIGS. 9A and 9B are views illustrating processes of adaptively determining a size of a unit file according to a bit rate of a broadcast signal according to exemplary embodiments; and
FIG. 10 is a flowchart illustrating a method of managing a file used for time shift according to an exemplary embodiment.

Exemplary embodiments are described in greater detail with reference to the accompanying drawings.

In the following description, the same drawing reference numerals are used for analogous elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

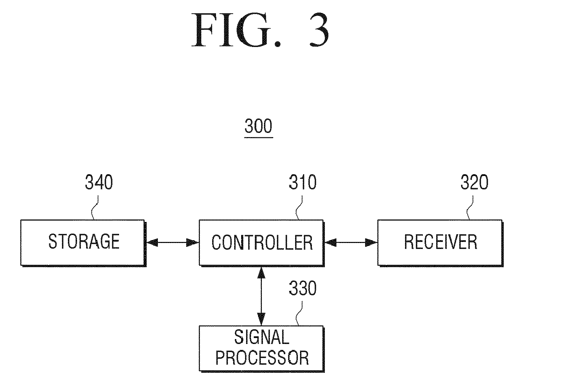

FIG. 3 is a block diagram illustrating a broadcast receiving apparatus 300 according to an exemplary embodiment. The broadcast receiving apparatus 300 may be realized as various types of electronic devices having storage means like a TV, a portable multimedia player (PMP), a personal digital assistant (PDA), a laptop personal computer (PC), a PC, a personal video recorder (PVR), an MP3 player, etc.

Referring to FIG. 3, the broadcast receiving apparatus 300 includes a controller 310, a receiver 320, a signal processor 330, and a storage 340. In an exemplary embodiment, at least one of the controller 310, the receiver 320, the signal processor 330, and the storage 340 are hardware components. For example, the storage 340 is a memory and the controller 310 and the signal processor 330 may be one or more of a hardware processor ASIC, and FPGA. The receiver 320 may be a tangible network card.

The receiver 320 receives a content from a broadcasting station or a web server transmitting a content file by using a broadcast network.

If the receiver 320 receives the content from the broadcasting station, the receiver 320 may include a demodulator (not shown) and an equalizer (not shown). If the receiver 320 receives the content from a source such as the web server, the receiver 320 may be realized as a network interface card (not shown).

As described above, the receiver 320 may be of various types according to exemplary embodiments.

The signal processor 330 performs signal processing with respect to broadcast data to process data received by the receiver 320 and output an image frame.

In detail, the signal processor 330 may include various types of elements such as a demultiplexer, a video decoder, an audio decoder, a data decoder, a scaler, a frame rate adjuster, an audio amplifier, and so on. Here, the demultiplexer detects video data, audio data, additional data, etc. from the broadcast data, and the video decoder decodes the detected video data, audio data, and additional data. Also, the scaler generates a video frame by using the video data processed by the video decoder, the frame rate adjuster adjusts a frame rate, and the audio amplifier amplifies the decoded audio data.

Therefore, the signal processor 330 performs operations, such as decoding, scaling, and frame rate converting, with respect to the broadcast data to convert a video signal into a form which may be output from a display (not shown) of the broadcast receiving apparatus 300. The signal processor 330 also performs processing, such as decoding or the like, with respect to an audio signal included in the broadcast data to convert an audio signal into a form which may be output from an audio output part (not shown) of the broadcast receiving apparatus 300.

The controller 310 controls an overall operation of the broadcast receiving apparatus 300 according to a user command. For example, if a time shift function is enabled, the controller 310 may perform an operation of storing real-time broadcast data in the storage 340.

Here, the controller 310 may not store the broadcast data in one file format but may divide the broadcast data into a plurality of files in the frame unit and store the plurality of files.

If a residual capacity of a storage area reaches a threshold value as the broadcast data is stored, the plurality of files may be sequentially deleted from the earliest stored one to secure a storage space.

The storage 340 stores the real-time broadcast data for providing the time shift function and for general recording. The storage 340 may be an internal memory such as a hard disk drive (HDD) or an external memory such as a memory stick, a memory card, or the like.

Here, the storage 340 stores the broadcast data as the plurality of files and a file index table of the plurality of files under control of the controller 310.

In an exemplary embodiment, broadcast data is stored as a plurality of files. Therefore, if a play command of a broadcast data file is input by a user, an index table indicating which broadcast data of which time zone is stored in which file is additionally stored.

Information about the plurality of files may be stored in the index table, and a file corresponding to a command of the user may be selected and played using mapping performed by the controller 310.

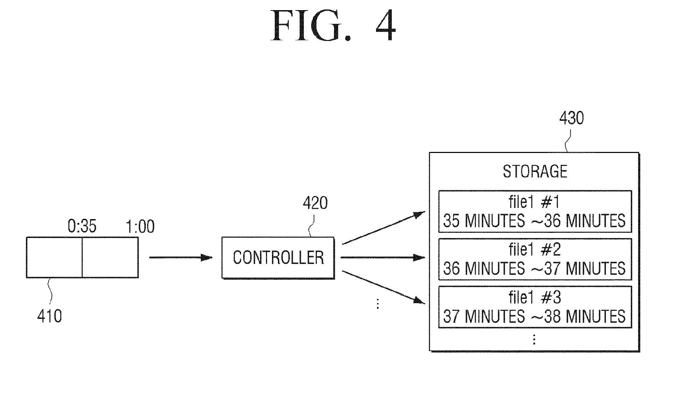

FIG. 4 is a view illustrating a method of diving real-time broadcast data into a plurality of files and storing the plurality of files according to an exemplary embodiment.

If a time shift function is enabled by a user, a controller 420 controls a signal processor (not shown) to store broadcast data 410 as a plurality of files.

Here, the files may be set according to a time of the broadcast data 410 or a size of a file.

For example, if a user executes the time shift function from a time when 35 minutes passes after a current program is broadcasted to one hour after the current program starts, i.e., to a time when the current program ends, the controller 420 may divide frames in the unit of 1 minute to store the files. In other words, a frame of the broadcast data 410 which is broadcasted for 1 minutes from a current time is stored in file #1, a frame of the broadcast data 410 which is broadcasted from 36 minutes to 37 minutes is stored in file #2, and a frame of the broadcast data 410 which is broadcasted from 37 minutes to 38 minutes is stored in file #3.

Therefore, if the user enables the time shift function from 35 minutes to 1 hour after the program starts, 25 time shift files are generated and stored in the storage 430.

As described above, if broadcast data is divided and stored as a plurality of files, only a particular sector is not used as in a circular buffer method. Therefore, a stability of an apparatus may be improved, and a time shift storage area may be variably changed. As a result, a storage space may be flexibly managed according to a characteristic of a broadcast signal or changes of a capacity of a storage device.

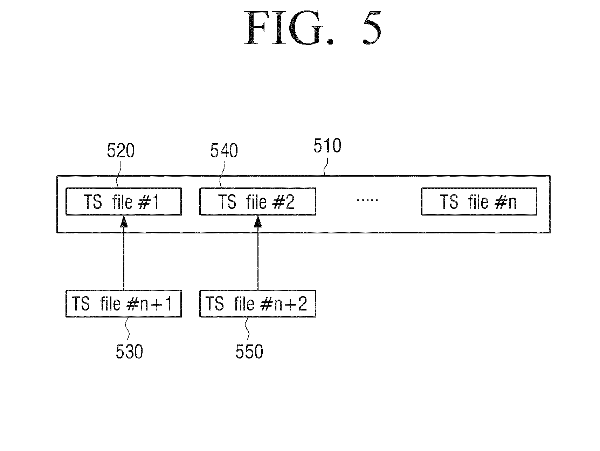

FIG. 5 is a view illustrating a method of deleting a time shift file to secure storage space if there is no available capacity in a storage space, according to an exemplary embodiment.

If a time shift function is enabled although a storage space 510 is filled, a controller deletes an earliest one of pre-stored time shift files to secure storage space.

If the controller 310 checks a residual capacity of the storage 340 to determine that a newly generated broadcast data file is greater than the residual capacity, the controller 310 sequentially deletes pre-stored broadcast data to secure an additional storage area.

For example, if the time shift function is continuously enabled, and thus, there is no residual capacity as the storage space 510 is filled, the controller deletes time shift (TS) file #1 520 and stores new TS file #n+1 in this space from the TS file #1 520 is deleted.

The controller 310 checks residual capacity of the storage space 510 and determines that it is impossible to store a new TS file, and as such, the above-described processes are repeated.

As described above, if a part of one file is not deleted, but instead data is deleted in the unit of file, a time shift file may be managed using a general-purpose file system arithmetic operation without supporting a deletion arithmetic operation supported only by a particular file system.

Although the time shift function is enabled for a long time, a performance deterioration caused by updating of a file allocation information table may be prevented.

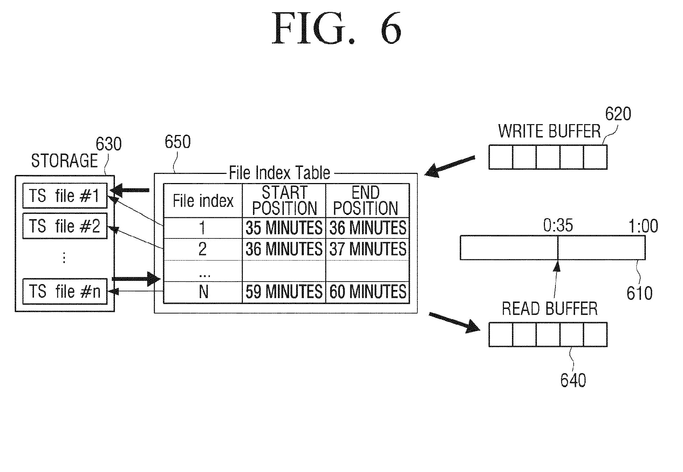

FIG. 6 is a view illustrating an index table of a plurality of files according to an exemplary embodiment.

According to an exemplary embodiment, broadcast data used for a time shift is stored as a plurality of files, and thus a storage stores an index table 650 including information about the plurality of files.

The controller 310 receives broadcast data 610 to generate the index table 650 when the broadcast data 610 is written as the plurality of files in a storage 630 using a write buffer 620.

Information about a start frame and an end frame storing the files is recorded in the index table 650.

For example, if a user enables a time shift function from a 35-minute time point of a particular program to a 1-hour time point to record broadcast data corresponding to the time shift function as a plurality of files in the storage 630, file information at each time is recorded.

If the user inputs a rewind command to view a broadcast 10 minutes prior to a current time, a controller finds a time shift file corresponding to a time designated by the user with reference to the index table 650 and calls the time shift file to a read buffer. The controller also plays the time shift file to output broadcast data to the user.

If an earliest stored time shift file is deleted due to a lack of an available capacity of a storage space, the controller 310 updates the index table 650 based on time offset information of the deleted time shift file. If a play command with respect to stored broadcast data is input, the controller 310 controls the signal processor 330 to detect and play a time shift file according to the updated index table 650.

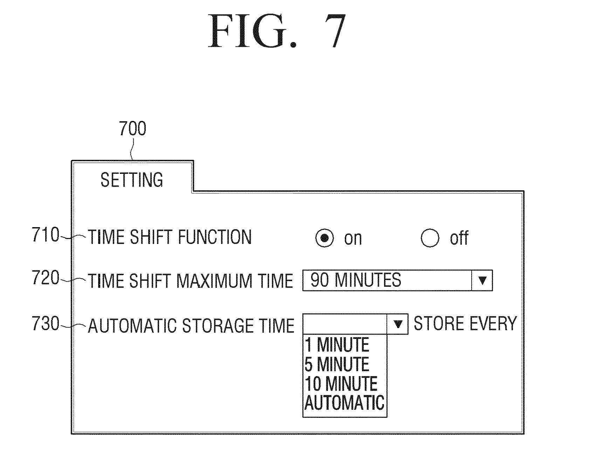

FIG. 7 is a view illustrating a user interface (UI) for setting a time shift function according to an exemplary embodiment.

In an exemplary embodiment, a broadcast receiving apparatus is a TV.

When a user views the TV, the time shift function may be enabled with turning on of the TV or may be turned on or off through one or more additional settings.

The user may turn on or off the time shift function in a time shift function setting UI window 700. If the user enables the time shift function in the time shift function setting UI window 700, real-time received broadcast data is recorded in the storage 340.

An available capacity of the storage 340 is limited. Therefore, if the user secures a large storage space to store another content, the time shift function may be turned off in the time shift function setting UI window 700. If the time shift function is turned off, real-time broadcast data is no longer recorded in the storage 340.

A time to which the time shift function is applied may be set in a time shift time setting window 720.

For example, if the user sets a time shift applying time to 90 minutes, broadcast data of 90 minutes may be recorded, and the user may view broadcast data maximum of 90 minutes prior to the current time. If the time shift applying time is set to 60 minutes, then the user may view a broadcast image a maximum of 60 minutes prior to the current time.

Therefore, if the user wants available space of the storage 340 to be allocated as a space for recording content, the time shift applying time may be minimized or lowered. If the user wants to maximize the time shift function of the broadcast receiving apparatus, the time shift applying time may be maximized or made higher.

Also, a size of a unit file may be set in the time shift function setting UI window 700.

According to an exemplary embodiment, broadcast data may not be stored as one file but may be divided into a plurality of files in the unit of frame and then stored in the storage 340.

A trade-off occurs according to a size of a unit file. If the size of the unit file is large, a storage space may not be efficiently used. If the size of the unit file is small, a deletion arithmetic operation may be frequently performed, thereby requiring a high-performance arithmetic operation apparatus.

For example, if a size of a unit file is set to be large, and thus broadcast data of 20 minutes is stored as one file, data from a start time of a particular program to 20 minutes is recorded as one file.

Here, if the user wants to call and view an image frame after 10 minutes has passed from a start time of a program, broadcast data between 0 minute and 10 minutes is unnecessary. Even in this case, broadcast data between 0 minute and 20 minutes is stored as one file and thus may not be deleted. Therefore, a storage space may not be efficiently used.

If the size of the unit file is set to be small, and thus broadcast data of 1 minute is stored as one file, 10 files are deleted in order to delete broadcast data between 0 minute and 10 minute. Therefore, arithmetic operations are increased, and an index table is complicated and frequent updated.

Therefore, the user may adjust a size of broadcast data recorded in one file in a unit file size setting window 730. If the size of the broadcast data is automatically set, the size of the unit file may be adaptively determined according to a bit rate of received broadcast data.

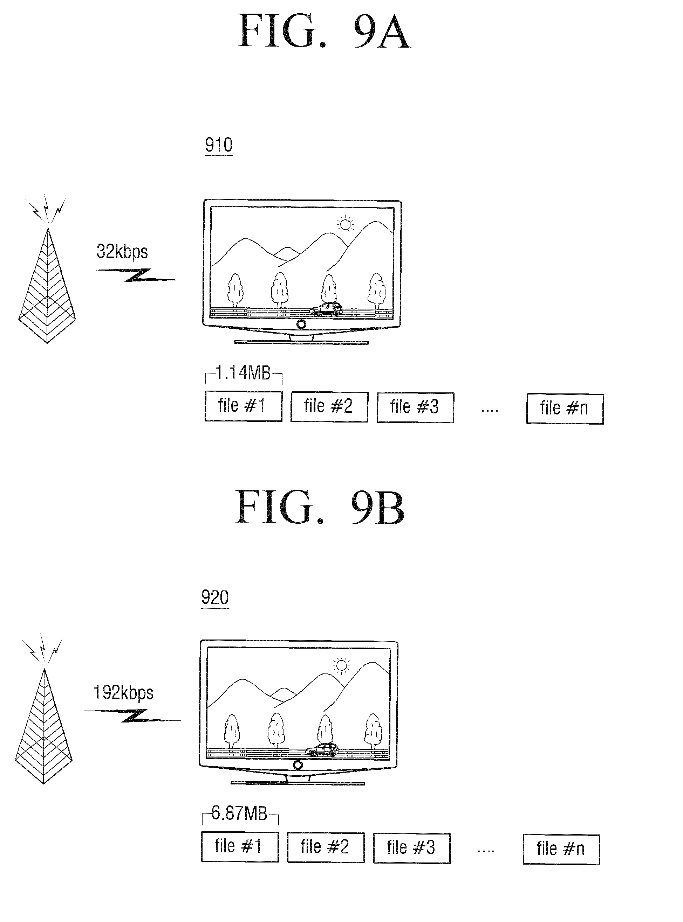

A change of the size of the unit file according to the bit rate of the broadcast data will be described in detail with reference to FIG. 9.

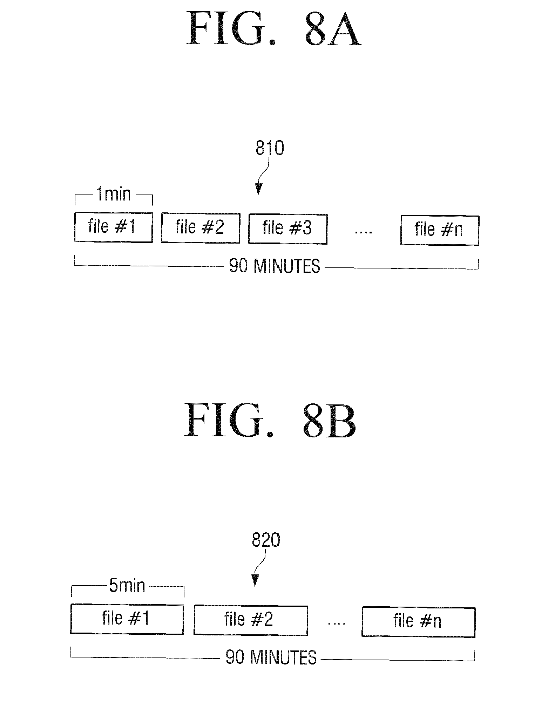

FIGS. 8A and 8B are views illustrating processes of storing broadcast data according to a size of a unit file according to exemplary embodiments.

In an exemplary embodiment, broadcast data used for a time shift is 90 minutes long.

If a user sets a size of a unit file to sufficient to record broadcast data of 1 minute, as shown in FIG. 8A, a total of 90 files are generated.

If a time shift function is continuously enabled, and real-time broadcast data is received, file #1 is deleted, file #n+1 is recorded, file #2 is deleted, and file #n+2 is recorded.

If the size of the unit file is set to be small as described above, an unnecessary file may be easily deleted, and thus a storage space may be efficiently used. However, a plurality of operations may be repeated to delete broadcast data, and thus a high-performance arithmetic apparatus is required.

Also, whenever a file is deleted, and a new file is generated, an index file is updated. Therefore, a burden is laid on an arithmetic apparatus, and a structure of an index table is complicated.

If the size of the unit file is set to a large enough size to record broadcast data of 5 minutes, as shown in FIG. 8B, the size of the unit file is 5 times as large as the one described above, but the total number of files is reduced to 1/5 (by 20%).

Therefore, the number of arithmetic operations is decreased, a burden on the arithmetic apparatus is reduced. However, files are stored including unnecessary data, and thus a storage space may not be used as efficiently as an example described above.

Accordingly, a size of a unit file may be adaptively determined according to a bit rate of a broadcast signal according to an exemplary embodiment.

FIGS. 9A and 9B are views illustrating processes of adaptively determining a size of a unit file according to a bit rate of a broadcast signal according to exemplary embodiments.

In an exemplary embodiment, to help understanding, a file is set to be stored every 5 minutes, and a size of a space storing a file for a time shift is 172,800 kbit.

A size of the file may be adaptively determined according to a bit rate of received broadcast data.

For example, if broadcast data is received at 32 kilobits per second (kbps) as shown in FIG. 9A, data of 1,920 kbit is received for 1 minute, and a size of a storage space is 172,800 kbit. Therefore, broadcast data of 90 minutes is used for a time shift may be stored.

If a user sets a file to be stored every 5 minutes, 18 files are generated to store broadcast data of 90 minutes. Therefore, a size of one file is 172,800 ÷ 18 = 9,600 kbit (=1.14 MB).

If broadcast data is received at 192 kbps as shown in FIG. 9B, data of 11,520 kbit is received for 1 minute, and a size of a space storing data for a time shift is 172,800 kbit. Therefore, broadcast data of 15 minutes may be stored.

Since the user sets the file to be stored every 5 minutes, 3 files are generated to store broadcast data of 15 minutes. Therefore, a size of one file is 172, 800÷ 3 = 57, 600 kbit (=6.87 MB).

As described above, if a size of a file is determined according to a bit rate of received broadcast data, an optimum file size is found and stored. Therefore, the number of deletion arithmetic operations may be minimized, and a storage space may be efficiently managed.

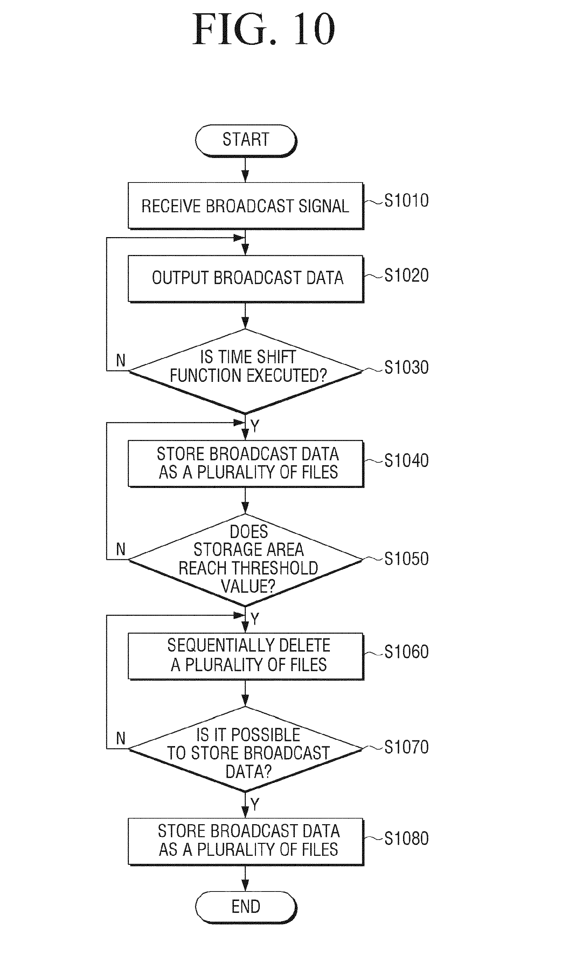

FIG. 10 is a flowchart illustrating a method of managing a file used for a time shift according to an exemplary embodiment.

Referring to FIG. 10, in operation S1010, a broadcast receiving apparatus receives a broadcast signal through the receiver 320. In operation S1020, the signal processor 330 outputs the broadcast signal as broadcast data e.g., on a display for a user to view.

In operation S1030, a determination is made as to whether a time shift function is executed by a user. If it is determined in operation S1030 that the time shift function is executed by the user, the controller 310 controls the signal processor 330 to store broadcast data as a plurality of files in operation S1040.

In operation S1050, a determination is made as to whether the broadcast data is continuously stored in the storage 340 and thus reaches a threshold value of a storage space. If it is determined in operation S1050 that the broadcast data reaches the threshold value of the storage space, the controller 310 sequentially deletes a plurality of pieces of broadcast data stored in the storage 340 to secure a storage space in operation S1060.

In operation S1070, the controller 310 determines an available capacity of the storage 340. If a storage space needed to store the broadcast data is still insufficient, the above-described operations are repeated to secure a storage space large enough to store the needed data, and the broadcast data is stored as a plurality of files in operation S1080.

According to the above-described various exemplary embodiments, a method of managing a memory of a terminal may be realized as a program code and stored on various types of non-transitory computer readable media to be provided to servers or apparatuses.

The non-transitory computer readable medium refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

The foregoing exemplary embodiments are merely exemplary and are not to be construed as limiting. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art. It is understood that all possible changes and/or modifications in form and details may be made therein without departing from the scope of an inventive concept as defined by the appended claims

## Claims

1. An apparatus for receiving a broadcast, the apparatus comprising:
a receiver which receives a broadcast signal;
a signal processor which processes the broadcast signal to output broadcast data;
a storage which stores the broadcast data; and
a controller which, if a time shift function is executed, controls the signal processor to divide the broadcast data into a plurality of files and to store the plurality of files, and, if a size of a storage area reaches a threshold value allocated to the time shift function, sequentially deletes the plurality of files to secure an additional storage area.

2. The apparatus of claim 1, wherein:
the storage stores a file index table of the plurality of files; and
the controller updates the file index table based on time offset information of a deleted file to secure the storage area, and, if a play command with respect to broadcast data stored by the time shift function is input, controls the signal processor to detect and play a file stored in the storage according to the updated file index table.

3. The apparatus of claim 1 or 2, wherein the controller stores subsequent data of the stored broadcast data in additional files and stores the additional files in the additional storage area.

4. The apparatus of any one of claims 1 through 3, wherein sizes of the files vary according to a bit rate of the broadcast signal.

5. A method of managing a file used for a time shift, the method comprising:
receiving a broadcast signal;
processing the broadcast signal to output broadcast data;
storing the broadcast data; and
if a time shift function is executed, dividing the broadcast data into a plurality of files and storing the plurality of files, and if a size of a storage area reaches a threshold value allocated to the time shift function, sequentially deleting the plurality of files to secure an additional storage area.

6. The method of claim 5, further comprising:
storing a file index table of the plurality of files;
updating the file index table based on time offset information of a deleted file to secure the storage area; and
if a play command with respect to broadcast data stored by the time shift function is input, controlling the signal processor to detect and play a file used for the time shift according to the updated file index table.

7. The method of claim 5 or 6, further comprising:
storing subsequent data of the stored broadcast data in additional files and storing the additional files in the additional storage area.

8. The method of any one of claims 5 through 7, wherein sizes of the files vary according to a bit rate of the broadcast signal.
